# EUROPEAN PATENT SPECIFICATION

(11) **EP 4 289 281 B1**
(45) Date of publication and mention of the grant of the patent: **29.10.2025**
(21) Application number: 23177324.3
(22) Date of filing: 05.06.2023
(51) Int. Cl.: A23D 9/02, C11B 7/00, C11C 1/00

(54) **A METHOD OF EFFICIENTLY SEPARATING SOLID FAT FROM POLYUNSATURATED FATTY ACID GREASE**
VERFAHREN ZUR EFFIZIENTEN ABTRENNUNG VON FESTEM FETT AUS MEHRFACH UNGESÄTTIGTEM FETTSÄUREFETT
PROCÉDÉ DE SÉPARATION EFFICACE DE GRAISSE SOLIDE À PARTIR DE GRAISSE D'ACIDE GRAS POLYINSATURÉ

(30) Priority: 08.06.2022 CN 202210651635
(43) Date of publication of application: 13.12.2023
(73) Proprietor: Zhejiang Keming Biopharmaceutical Co., Ltd, Xinchang, Zhejiang 312500 (CN)
(72) Inventor: XU, Xinde, Shaoxin City, 312500 (CN); ZHAO, Jian, Shaoxin City, 312500 (CN); CHAO, Hongjuan, Shaoxin City, 312500 (CN); WANG, Xiaoping, Shaoxin City, 312500 (CN)
(74) Representative: Murgitroyd & Company

(56) References cited:
- CN-A- 102 309 881
- SARA P. CUELLAR-BERMUDEZ ET AL: "Extraction and purification of high-value metabolites from microalgae: essential lipids, astaxanthin and phycobiliproteins : High-value metabolites form algae", MICROBIAL BIOTECHNOLOGY, vol. 8, no. 2, 15 September 2014 (2014-09-15), GB, pages 190 - 209, XP055381640, ISSN: 1751-7915, DOI: 10.1111/1751-7915.12167
- KIRK-OTHMER ED - MARK H F ET AL: "Encyclopedia of chemical technology", 1 January 1978, KIRK - OTHMER ENCYCLOPEDIA OF CHEMICAL TECHNOLOGY. ENAMELS, PORCELAIN OR VITREOUS, TO FERRITES, NEW YORK, WILEY & SONS, US, PAGE(S) 795 - 831, XP002108520
- "Technological Innovations in Major World Oil Crops, Volume 2", 24 September 2011, SPRINGER NEW YORK, New York, NY, ISBN: 978-1-46-140827-7, article BERTRAND MATTH�US: "Oil Technology", pages: 23 - 92, XP055135017, DOI: 10.1007/978-1-4614-0827-7_2

## Description

### FIELD OF THE INVENTION

The present invention relates a method of efficiently separating solid fat from polyunsaturated fatty acid grease. In particular, the method comprises adding a certain amount of inert material to a polyunsaturated fatty acid grease, and stirring slowly, cooling crystallization, and filtering to obtain a clarified polyunsaturated fatty acid grease, and then introducing hot air or hot steam for melting solid fat absorbed in filter cake, and collecting through a filter plate. This method not only improves the clarity of the polyunsaturated fatty acid grease, but also efficiently collects and obtains the solid fat. It is suitable for winterizing operation of one or more polyunsaturated fatty acid mixtures including fish oil (directly extractedω-3 polyunsaturated fatty acid), algal oil (fermented-3 polyunsaturated fatty acid), linoleic acid, conjugated linoleic acid, linolenic acid, arachidonic acid, etc. The present invention belongs to the field of biological chemical industry.

### BACKGROUND OF THE INVENTION

As people are increasingly concerned about their own health, the public is starting to take more nutritious and healthy dietary supplements. Polyunsaturated fatty acid (PUFA) products play an important role on them. Polyunsaturated fatty acid is referred to as fatty acids containing at least two double bonds in the molecular structural formula. The existing forms include fatty acid ethyl ester, fatty acid methyl ester, fatty acid glyceride, and free fatty acid, etc.

Polyunsaturated fatty acid (PUFA) is the metabolism, especially is an important material basis in infant brain development and other activities, and is a component of cell membrane. Polyunsaturated fatty acid (PUFA) mainly plays physiological functions on maintaining cell membrane fluidity, promoting cholesterol esterification, reducing cholesterol and triglycerides, reducing blood viscosity, and improving blood circulation. At the same time polyunsaturated fatty acid (PUFA) also has the functions of improving human thinking and enhancing memory. However, the human body can not synthesize polyunsaturated fatty acid (PUFA) by itself, and polyunsaturated fatty acid (PUFA) must be obtained through diet, etc.

There are various types of polyunsaturated fatty acid (PUFA), mainly including ω-3 polyunsaturated fatty acid (PUFA) (ω-3 PUFA), ω-6 polyunsaturated fatty acid (PUFA) (ω-6 PUFA), ω-9 polyunsaturated fatty acid (PUFA) (ω-9 PUFA) and other forms, in particular including α-linolenic acid (ALA), eicosapentaenoic acid (EPA), docosahexaenoic acid (DHA), docosapentaenoic acid (DPA), linoleic acid (LA), conjugated linoleic acid (CLA), γ-linolenic acid (GLA), arachidonic acid (AA), etc.. Among them, the ω-3 polyunsaturated fatty acid (ω-3 PUFA) represented by eicosapentaenoic acid (EPA) and docosahexaenoic acid (DHA) are the most well-known and accepted by the public, and have the most obvious improvement and promotion effects on human and animal health. The molecular structure formula of some polyunsaturated fatty acid is as follows:

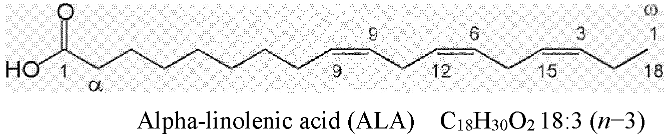

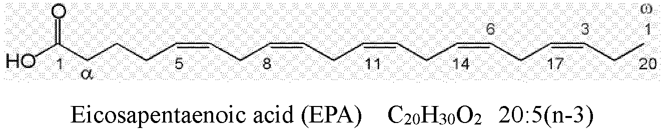

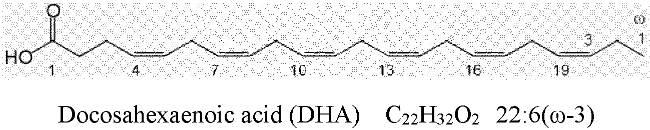

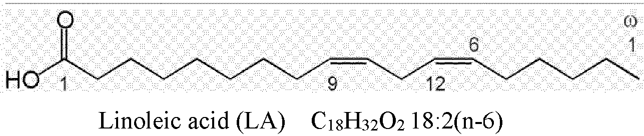

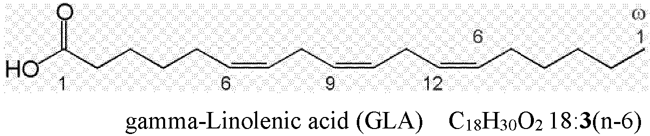

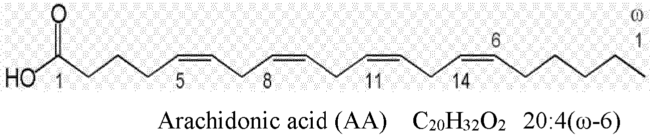

Polyunsaturated fatty acid is mainly derived from algae extract and aquatic animal oil, wherein one of the important sources is fish oil. Due to the fatty acid composition in polyunsaturated fatty acid grease is relatively complex, containing saturated, monounsaturated and polyunsaturated fatty acid, etc. The melting point of these fatty acids is quite different. Saturated fatty acids such as C16:0, C18:0, C20:0, etc. will condense into a solid state at 10 °C or even around 20 °C. Monounsaturated or diunsaturated fatty acids such as C16:2, C18:1 and C18:2 do not precipitate at 0 °C. Polyunsaturated fatty acid such as C16:4, C18:3, C20:4, C20:5 and C22:6 remains in a clarified state below -10 °C. The so-called solid fat is referred to as saturated fatty acids such as C16:0, C18:0 and C20:0, and even low saturation fatty acids such as C16:2, C18:1 and C20:1 are a type of substances with a relatively high melting point.

Polyunsaturated fatty acid generally has good effects of softening blood vessels and reducing triglycerides. Saturated fatty acids do not have such physiological functions. So most of polyunsaturated fatty acid, especially functional polyunsaturated fatty acid, such as fish oil and conjugated linoleic acid, etc., are mainly used in the field of dietary supplements. In the field of dietary supplements, the polyunsaturated fatty acid is often taken in the form of clear soft capsules. From the perspective of appearance, it is also required that the contents of soft capsules should be as transparent as possible. Polyunsaturated fatty acid and related product are produced in industry, the final product standards all have certain requirements for product clarification, such as colorless to light yellow transparent liquid. So the industrial production process of polyunsaturated fatty acid basically includes the winterization process. The main purpose is to remove saturated components in polyunsaturated fatty acid, or low saturated components with fewer double bonds such as solid fat, to improve its physiological effects and maintain its clarity.

Saturated fatty acids or low unsaturated fat acids (containing one-two double bonds in the molecular structure formula) are useful in supplementing animal fat and providing energy and widely used in food or animal feed fields, or be used for other industrial purposes.

In industrial production, especially in preparing polyunsaturated fatty acid raw materials used in soft capsules, polyunsaturated fatty acid is generally winterized to remove saturated and low-saturated components of fatty acids. In other words, the polyunsaturated fatty acid is cooled to 0 °C or below 0 °C for a period of time to precipitate fatty acid crystals at a temperature of lower than 0 °C or below 0 °C of the freezing point, and then remove fatty acids (solid fat) precipitated by filtration. In this process, it is very critical operating steps how to make saturated or low-saturated components fully crystallized and precipitated and ensure polyunsaturated components not to precipitated as much as possible to ensure product yield, and how to effectively separate saturated or low-saturated components (solid fat) crystallized and precipitated from polyunsaturated fatty acid without crystallization.

For fats with more medium and low carbon chain saturated fatty acids component (such as C12:0, C14:0 and C16:0) in fatty acid composition, due to these medium and low carbon chain saturated fatty acids having high freezing point, they are easy to crystallize and precipitate, to obtain coarse crystals. It is also easier to separate during the subsequent crystallization process. However, for those fatty acid composition having not many medium and low carbon chain saturated fatty acids components and only containing a small amount of medium and long carbon chain low saturated fatty acids (such as C18:1, C19:2, C20:1, C20:2, C21:1, C21:2, etc.). On the one hand, due to fewer crystal seeds during the cooling crystallization process, the crystallization temperature is required to be low, resulting in crystallization precipitation difficult, crystallization slowly, and sometimes even incomplete precipitation, and thus it can not achieve effects of winterization crystallization. On the other hand, the subsequent crystallization separation process is relatively difficult, because it requires long-term pressure filtration through separation methods such as plate and frame filtration. In order to dry filter cakes, compressed air or nitrogen gas must be used for long-term blowing in the future. In this process, part of the crystals in the plate and frame filtration will dissolve due to rise temperature, and then re-enter unsaturated components . So it leads to unsatisfactory final winterization effects.

In addition, for these medium and long carbon chain fatty acids merely containing a small amount of low saturated fatty acids, on the one hand, the number of crystals produced during winterization is relatively small, and then it can not form a fixed shape filter cake during filtration; on the other hand, due to the melting point of low saturated components is relatively low, it is easy to remelt in the air. It leads to easily partial melting when unloading slag from the board and frame, Consequently it results in incomplete discharge of filter cakes when unloading and partially adheres to the plate frame filter cloth. So it will reduce the winterization effect and efficiency. The adhered low-melting point components are easy to melt and then enter the filtrate of unsaturated fat components after winterization in the next batch. Consequently it reduces the winterization efficiency, moreover, and reduces the process economy due to the inability to effectively reuse the precipitated low saturation component solid fats.

In the prior art, there are a lot of researches to improve the winterization and crystallization efficiency and separation efficiency of polyunsaturated fatty acid from the aspect of process or equipment innovation.

CN12552198A discloses a secondary slow cooling fish oil winterization process and the filter equipment used. The precipitation rate of high freezing point fish oil is high by cooling stirring, standing for crystal growth, filtering crystal removal, the precipitated fish oil crystals are not easy to remelt, and the crystals are separated by a complicated customized equipment. The equipment has a small filtering area, complex design and low separation efficiency, in particular, it is difficult to crystallize and separate for low saturation crystalline components merely containing a small amount of freezing point.

CN205501251A describes a simple device for winterizing fish oil, which achieves heating dissolution and cooling crystallization of fish oil in the same tank, and achieves winterizing filtration. This device needs to achieve heating, cooling, and filtration processes within a set of equipment, with relatively small heat exchange and filtration areas, low efficiency, long operation time, and poor practicality in production.

CN103740462B discloses to a method of oil refining, including the desaturated fat process. In particular, the oil that has undergone impurity removal, degumming, acid removal, and deodorization is further heated and dissolved in a winterization tank, cooled and crystallized in stages. After long-term crystallization, it is filtered by a winterization filter to obtain a refined oil without saturated fats. In this process, a crystal maintenance time of crystallization is very long, filtration is difficult and production efficiency is low.

CN206529439U published a fish oil crystallization reaction tank for winterization, fractionation and crystallization. The problem of difficult odor escape during winterization, fractionation and crystallization is solved and the heat transfer efficiency is improved, by bubbling nitrogen gas into the crystallization process during winterization. But this equipment does not describe the separation process of crystallization, and also has the drawbacks of slow separation speed and long time.

CN1605617A describes a precision microporous filtration method and device for winterized edible oil dewaxing grease. In this method, after stopping transportation of winterized edible oil, filter press with compressed air, after completing the pressure filtration, open a residual material return valve of the lower position to empty remaining materials inside the machine, then open the bottom cover, blowback with compressed air, blow all the grease and wax filter cakes back off and discharge them through the bottom slag discharge port, close the bottom cover after 4-6 times of blowing back, and afterwards carry out the next batch of filtration. When the filter tube is blocked, regenerating the microporous filter tube with post heated compressed air. In this process and its device, on the one hand, it is required that the winterized grease wax have a certain amount, so that the formed filter cake is thick enough to be blown off, which is not suitable for the grease with few saturated components. On the other hand, it is necessary to frequently blow back using hot compressed air to facilitate the regeneration of the filter tube. But, the operation is relatively cumbersome, reducing efficiency.

CN109897726A discloses a pressing process for extracting tea oil from tea oil seeds, including processing, pressing, filtering, degumming, dewaxing, deacidification and other processes in the early tea oil seeds stage. In the dewaxing process, more crystallization promoting and filtration aids are added at one time, and activated carbon and perlite are used to simultaneously promote crystallization and filtration. But adding a large amount of crystal promoting agents at once will inevitably lead to more crystal precipitation. Many fatty acids that should not precipitate at the crystallization temperature will be adsorbed on the promoter, greatly reducing the yield of the final product.

S. P. Cuellar-Bermudez et al, Microbial Biotechnology, 2015, 8 (2), 190-209 discloses and discusses various methods for extracting and purifying polyunsaturated fatty acids from microalgae.

In general, there are several defects in the previous winterization refining technology of oil and fat. 1) Low crystallization efficiency, In particular, for raw materials with low content of saturated fatty acids and only a small amount of low freezing point saturated fatty acids, due to the difficulty in crystal precipitation and fewer crystal seeds, the efficiency of winterization crystallization is lower. 2) Low separation efficiency of precipitated crystals. Fatty acids and fats themselves are relatively difficult to separate. If the main components of these fats are low saturated fatty acids, due to their low freezing point and small amount, it is difficult to achieve rapid and complete separation between the filtrate and the fat when filtered by plate frame or other methods. Moreover, during a long separation process, some low freezing point solids are easily re dissolved into the filtrate, thereby reducing the quality of the clarified liquid and winterizing efficiency. 3) One-time addition of crystal promoting filter aids greatly reduces the yield of the final product.

Especially in the prior art, solid fat precipitated from winterization is not well recycled or its recovery method is complex. It was reported that put a filter aid adsorbing a solid fat back into the reaction for heating and dissolution, and then filter to obtain a melted solid fat. During the process, the filter cake used for filtering polyunsaturated fatty acid shall be discharged from the filter, and transferred to the reactor for heating and melting, and filter it by the filter again to recover solid fat. The process includes slag unloading, transferring, re-feeding, dissolving, re-filtering, re-discharging, re-transferring and other processes of solid materials. For solid filter cakes with strong saturated adsorption odor and polyunsaturated fatty acids, these operations are extremely unfavorable in terms of labor intensity and environmental protection.

### SUMMARY OF THE INVENTION

In view of previous technical defects, it is necessary to find a method of making saturated and low-saturated fatty acids in oils efficiently winterized and crystallized, and to achieve efficient separation. It can realize the recycling of solid fat separated from the winterization results and enhance the economy.

In order to achieve the above purposes, the present invention provides a method of efficiently separating solid fat from polyunsaturated fatty acid grease. In particular, adding a small amount of inert solid powder to the polyunsaturated fatty acid grease before winterization. The small amount of the inert solid powder may be used as crystal seeds. The crystal seeds are conducive to crystallization of saturated or low-saturated components in the oils when cooling, and the crystals grow during crystallization, so as to overcome the shortcomings of slow crystal precipitation and long crystal growth time. At the same time, the inert solid powder may be used as a filter aid during crystal separation. The inert solid powder is conducive to efficient separation of crystals, in order to avoid the crystals remelting to enter the filtrate during the long-term filtration process, and reduce the winterization effect and efficiency of the final product. The filter cake obtained by filtration does not need to be unloaded from the filter, but is directly fed with superheated steam or hot air to melt the solid fat adsorbed in the inert solid powder. The melted solid fat is then collected and recycled through the filter plate. The filter cake (inert solid powder) after separating the solid fat can be used again.

The process of the present invention comprises the following steps: a) adding a certain amount, namely 0. .1-6.0% (w/w) of a mass of the polyunsaturated fatty acid grease of inert solid powder to a heated melted polyunsaturated fatty acid grease, and stirring evenly, the inert solid powder is selected from the group consisting of activated carbon, activated clay, diatomite and perlite; b) cooling crystallization the polyunsaturated fatty acid grease containing the inert solid powder obtained by step a), to obtain a crystalline mixture; c) filtering the crystalline mixture obtained by step b) through a filter, to obtain a clarified polyunsaturated fatty acid grease and a filter cake; d) introducing hot gas into the filter to make a solid fat melted into a liquid, and then recovering a liquid solid fat; e) introducing nitrogen into the filter, blowing dry residual solid fat; and f) recovering a filter cake with inert solid powder.

Wherein the solid fat is referred to as saturated and low saturated fatty acid components in the polyunsaturated fatty acid grease, such as C12:0, C14:0, C16:0, C18:1, C19:2, C20:1, C20:2, C21:1, C21:2, and so on. The freezing point of the fatty acid is higher than that of the polyunsaturated fatty acid.

In the preferred technical solution of the method of the present invention, preferably, the polyunsaturated fatty acid grease is selected from the group consisting of fish oil, algal oil, linoleic acid, conjugated linoleic acid, linolenic acid and arachidonic acid. Preferably, the polyunsaturated fatty acid may exist in the form of methyl ester, ethyl ester, glycerol ester, or free fatty acid.

In the preferred technical solution of the method of the present invention, preferably, in step a), a melting temperature of the polyunsaturated fatty acid grease is 30-100 °C. So this makes the oil completely clear and transparent. Preferably, an additive amount of the inert solid powder is 0.1-1.0% (w/w) of a mass of the polyunsaturated fatty acid grease.

In the preferred technical solution of the method of the present invention, preferably, a temperature of the cooling crystallization is -10-5 °C. And preferably it maintains 0.5-3.0 hours of crystal grown to form a crystalline liquid. Since there is a small amount of inert solid powder in the molten fatty acid grease, the powder plays a function of crystal seed in a sense, the saturated components and low-saturated components (solid fat) in fatty acid oils are easy to precipitate in the form of crystallization. And the crystal growth is good and the crystal shape is thicker, and it is conducive to the subsequent separation process.

The crystalline liquid including inert solid powder will be separated by the filter to achieve solid-liquid separation, after completing crystal grown. Due to the filtration assistance of inert solid substances, solid-liquid separation is very easy. Conventional winterization crystallization methods without adding inert substances often require more than 10hr, sometimes even about 24hr, to achieve solid-liquid separation. In the later stage, a large amount of nitrogen or compressed air is needed to blow dry residual liquid grease in the crystals. On the one hand, it causes unnecessary waste. On the other hand, partly precipitated crystals will remelt to enter the filtrate during a long-term filtration or blow drying process. It greatly reduces the winterization crystallization effect. Using the process of the present invention, due to add inert solid powders, the crystal precipitated in the early stage is thicker and adsorbed to the inert powder medium. Coupled with the filtration aid of inert powders, it is easier to achieve solid-liquid separation. The research found that under the condition of the same filtration area, the solid-liquid separation time is more than twice as short as conventional methods, generally about 3hr. In addition, only a small amount of nitrogen or compressed air can be used to blow dry the filter cake.

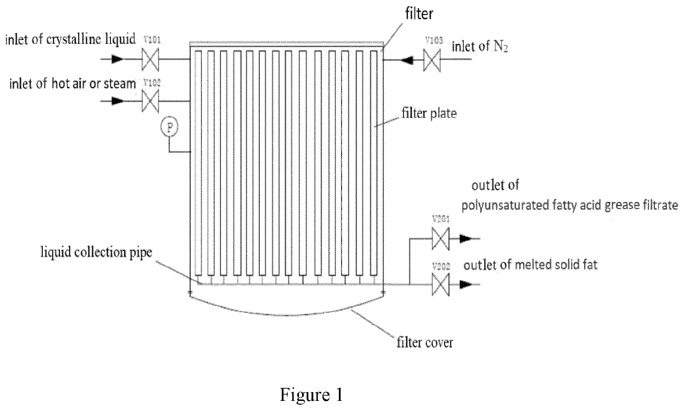

Considering that when inert solid powder is added at once, due to add a large number of crystal seeds, this will result in a large amount of fatty acid components that should not be precipitated being entrained and precipitated, thereby reduce the yield of the final product. So inert solid powders can also be added in batches. That is, add a small amount of inert solid powders before cooling crystallization. After completing crystallization, adding remaining inert solid powders, stirring evenly, and then filtering through a filter as shown in Figure 1.

So in the preferred technical solution of the method of the present invention, preferably, in step b), after cooling crystallization and before filtering, adding a certain amount of the inert solid powder. Preferably, in step b), after cooling crystallization and before filtering, an additive amount of the inert solid powder is 0.5-6.0% (w/w) of a mass of the polyunsaturated fatty acid grease.

As show in Figure 1, the crystalline liquid containing inert solid powders is filtered through a V101 filter, and the inert solid powder together with the solid fat crystallized adhere to the filter plate to form a filter cake. A clarified filtrate is collected through V201. After completing filtration, close V101 and V201, open V102 to enter hot gas, and then a temperature of a chamber in the filter is increased. This causes the solid grease adsorbed on inert solid powder to be melted in the chamber of the filter. At the same time, due to the pressure of the hot gas, the melted solid fat is collected through a filter plate, liquid collection pipe and V202. When no liquid can be seen flowing out of V202, close V102, open nitrogen valve V103, and blow dry the filter cake. Finally, open the filter cover and recycle the inert solid filter cake, which can be used for the next application.

In the preferred technical solution of the method of the present invention, preferably, in step d), the hot gas is a heating steam, a heating nitrogen, a heating air; a temperature of the hot gas is 30 °C-100 °C. More preferably, a temperature of the hot gas is 80 °C-100 °C.

The recovered solid fat can be used for food, feed or other industrial uses. The recovered filter cake is an inert medium, which can be stored under nitrogen and then re-used for winterizing crystallization of next batch of fatty acid fats.

The method of the present invention can be efficiently separated saturated and low-saturated fatty acids from polyunsaturated fatty acid grease. In the process, the winterization crystallization time is short, the crystallization is complete, the crystal separation is easy. It will not cause some solid fat melting and re-entering the filtrate due to long separation and blowing dry time in conventional process. The yield of final products is high up to 89.8%-97.8%. Moreover, after winterization, the lipid clarity of the polyunsaturated fatty acid grease is good, and no crystal precipitation would occur at 0 °C for 5hrs. The process has convenient solid fat recycling, high recycling efficiency and closed operation. The inert medium added during the process can be applied repeatedly, without additional solid waste, and good environmental protection.

### BRIEF DESCRIPTION OF THE DRAWINGS

Figure 1 is a schematic diagram of a filter used for filtering and recovering solid fat.

### DETAILED DESCRIPTION OF THE PRESENT INVENTION AND PREFERRED EMBODIMENTS THEREOF

Hereafter, the present invention will be described specifically with reference to examples. The examples are given only for illustration of the technical solution of the present invention and should not be construed to limit the present invention.

### EXAMPLE 1

Dissolve 1800 g of ethyl ester type polyunsaturated fatty acid fish oil raw material (EPA 22.4%, DHA 8.7%, a total content of polyunsaturated fatty acid is 34.2%, color orange red) under keeping warm at 65 °C for 0.5 hrs, and then add 9.0 g of activated clay to obtain a mixture. Afterwards, cool the mixture for winterization crystallization to make a temperature lowered from 65 °C to -2.5 °C within 30 minutes. And then keep warm for crystal growth for 20 minutes. Then add 60.0 g activated clay and 48.0 g activated carbon under stirring for 0.5 hrs to obtain a crystalline liquid.

As show in Figure 1, open a crystalline liquid feed valve V101 of the filter to filter the crystalline liquid containing activated clay and activated carbon, put the polyunsaturated fatty acid filtrate through a filter plate to a liquid collection pipe, and then pass through the filtrate outlet valve V201. Collect a filtrate and weigh 1731.6 g with the yield of 96.2%.

Take 20ml of the filtrate and keep warm at 0 °C for 5 hrs. The filtrate is still clear and transparent. This shows that the effect of winterization is very good.

As shown in Figure 1, close a crystalline liquid feed valve V101, a filter liquid discharge valve V201, and add heated nitrogen gas at 100 °C through V102 to melt the solid fat adsorbed in the filter cake, and then enter into a liquid collection pipe through the filter plate, and then collect it through a valve V202, finally recover 58.8 g of a filtrate (solid fat), afterwards, blow dry a filter cake with nitrogen, open the filter cover. The filter cake recovered may be used for the next winterization process.

### EXAMPLE 2

Dissolve 3000g of the same raw materials as that of Example 1 under keeping warm at 100 °C for 0.5 hrs to obtain a mixture. And then slowly cool for winterization crystallization the mixture to make a temperature lowered from 100 °C to -10.0 °C within 3.0 hrs. And then keep warm for crystal growth for 20 minutes to obtain a crystalline liquid. Add 3.0 g of activated carbon and then continue to stir for 0.5 hrs to obtain a crystalline liquid.

As show in Figure 1, open a crystalline liquid feed valve V101 of the filter to filter the crystalline liquid containing activated carbon, put the polyunsaturated fatty acid filtrate through a filter plate to a liquid collection pipe, and then pass through a filtrate outlet valve V201. Collect a filtrate and weigh 2934.2 g with the yield of 97.8%.

Take 20ml of the filtrate and keep warm at 0 °C for 5hrs. The filtrate is still clear and transparent. This shows that the effect of winterization is very good.

As shown in Figure 1, close a crystalline liquid feed valve V101 and a filter liquid discharge valve V201, and add heated nitrogen gas at 30 °C through V102 to melt the solid fat adsorbed in the filter cake, and then enter into a liquid collection pipe through the filter plate, and then collect it through a valve V202, finally recover 57.9 g of a filtrate (solid fat), afterwards, blow dry a filter cake with nitrogen, open the filter cover. The filter cake recovered may be used for the next winterization process.

### EXAMPLE 3

Dissolve 3500g of the same raw materials as that of Example 1 under keeping warm at 65 °C for 0.5 hrs to obtain a mixture. Add 60 g of activated clay and 150 g of activated carbon. And then slowly cool for winterization crystallization the mixture to make a temperature lowered from 65 °C to -2.5 °C within 2.5 hrs to precipitate a large amount of crystals, and then keep warm for crystal growth for 20 minutes to obtain a crystalline liquid.

As show in Figure 1, open a crystalline liquid feed valve V101 of the filter to filter the crystalline liquid containing activated clay and activated carbon, put the polyunsaturated fatty acid filtrate through a filter plate to a liquid collection pipe, and then pass through a filtrate outlet valve V201. Collect a filtrate and weigh 3300.5 g with the yield of 94.3%.

Take 20ml of the filtrate and keep warm at 0 °C for 5hrs. The filtrate is still clear and transparent. This shows that the effect of winterization is very good.

As shown in Figure 1, close a crystalline liquid feed valve V101 and a filter liquid discharge valve V201, and add superheated steam at 100 °C through V102 to melt the solid fat adsorbed in the filter cake, and then enter into a liquid collection pipe through the filter plate, and then collect it through a valve V202, finally recover 157.2 g of a filtrate (solid fat), afterwards, blow dry a filter cake with nitrogen, open the filter cover. The filter cake recovered may be used for the next winterization process.

### EXAMPLE 4

Dissolve 2000 g of triglyceride type polyunsaturated fatty acid algal oil raw material obtained by fermentation (EPA 3.4%, DHA 24.6%, a total content of polyunsaturated fatty acid is 31.2%, color orange red) under keeping warm at 30 °C for 1.5 hrs, and then add 2.0 g of pearlite to obtain a mixture. Afterwards, cool the mixture for winterization crystallization to make a temperature lowered to -10.0 °C within 45 minutes. And then keep warm for crystal growth for 30 minutes. Then add 40 g diatomite under stirring for 0.5 hrs to obtain a crystalline liquid.

As show in Figure 1, open a crystalline liquid feed valve V101 of the filter to filter the crystalline liquid containing pearlite and diatomite, put the polyunsaturated fatty acid filtrate through a filter plate to a liquid collection pipe, and then pass through a filtrate outlet valve V201. Collect a filtrate and weigh 1902.0 g with the yield of 95.1%.

Take 20ml of the filtrate and keep warm at 0 °C for 5hr. The filtrate is still clear and transparent. This shows that the effect of winterization is very good.

As shown in Figure 1, close a crystalline liquid feed valve V101 and a filter liquid discharge valve V201, and add heated airs at 30 °C through V102 to melt the solid fat adsorbed in the filter cake, and then enter into a liquid collection pipe through the filter plate, and then collect it through a valve V202, finally recover 77.9 g of a filtrate (solid fat), afterwards, blow dry a filter cake with nitrogen, open the filter cover. The filter cake recovered may be used for the next winterization process.

### EXAMPLE 5

Dissolve 3000 g of free conjugated linoleic acid (a content is 78.5%,) under keeping warm at 100 °C for 1.0 hr, and then add 30 g of diatomite to obtain a mixture. Afterwards, cool the mixture for winterization crystallization to make a temperature lowered from 100 °C to 5 °C within 60 minutes. And then keep warm for crystal growth for 45 minutes. Then add 75 g diatomite under stirring for 0.5 hrs to obtain a crystalline liquid.

As show in Figure 1, open a crystalline liquid feed valve V101 of the filter to filter the crystalline liquid containing diatomite, put the polyunsaturated fatty acid filtrate through a filter plate to a liquid collection pipe, and then pass through a filtrate outlet valve V201. Collect a filtrate and weigh 2826.0 g with the yield of 94.2%.

Take 20ml of the filtrate and keep warm at 0 °C for 5hr. The filtrate is still clear and transparent. This shows that the effect of winterization is very good.

As shown in Figure 1, close a crystalline liquid feed valve V101 and a filter liquid discharge valve V201, and add heated airs at 70 °C through V102 to melt the solid fat adsorbed in the filter cake, and then enter into a liquid collection pipe through the filter plate, and then collect it through a valve V202, finally recover 153.8 g of a filtrate (solid fat), afterwards, blow dry a filter cake with nitrogen, open the filter cover. The filter cake recovered may be used for the next winterization process.

### EXAMPLE 6

Dissolve 2800 g of methyl ester type arachidonic acid raw material (a content is 64.1%,) under keeping warm at 60 °C for 0.5 hrs, and then add 3.0 g of pearlite to obtain a mixture. Afterwards, cool the mixture for winterization crystallization to make a temperature lowered to 2 °C within 60 minutes. And then keep warm for crystal growth for 45 minutes. Then add 14 g pearlite under stirring for 0.5 hrs to obtain a crystalline liquid.

As show in Figure 1, open a crystalline liquid feed valve V101 of the filter to filter the crystalline liquid containing pearlite, put the polyunsaturated fatty acid filtrate through a filter plate to a liquid collection pipe, and then pass through a filtrate outlet valve V201. Collect a filtrate and weigh 2567.6 g with the yield of 91.7%.

Take 20ml of the filtrate and keep warm at 0 °C for 5hr. The filtrate is still clear and transparent. This shows that the effect of winterization is very good.

As shown in Figure 1, close a crystalline liquid feed valve V101 and a filter liquid discharge valve V201, and add superheated steam at 100 °C through V102 to melt the solid fat adsorbed in the filter cake, and then enter into a liquid collection pipe through the filter plate, and then collect it through a valve V202, finally recover 203.7 g of a filtrate (solid fat), afterwards, blow dry a filter cake with nitrogen, open the filter cover. The filter cake recovered may be used for the next winterization process.

### EXAMPLE 7

Dissolve 3500 g of triglyceride type linolenic acid and linoleic acid mixture raw material (a content of linolenic acid is 12.7%, a content of linoleic acid is 34.5%) under keeping warm at 80 °C for 0.45 hrs. Afterwards, cool the mixture for winterization crystallization to make a temperature lowered to -2.5 °C within 45 minutes. And then keep warm for crystal growth for 45 minutes. Then add 10 g diatomite, 45 g of activated clay and 60 g pearlite under stirring for 0.5 hrs to obtain a crystalline liquid.

As show in Figure 1, open a crystalline liquid feed valve V101 of the filter to filter the crystalline liquid containing diatomite, activated clay and pearlite, put the polyunsaturated fatty acid filtrate through a filter plate to a liquid collection pipe, and then pass through a filtrate outlet valve V201. Collect a filtrate and weigh 3143.0 g with the yield of 89.8% .

Take 20ml of the filtrate and keep warm at 0 °C for 5hr. The filtrate is still clear and transparent. This shows that the effect of winterization is very good.

As shown in Figure 1, close a crystalline liquid feed valve V101 and a filter liquid discharge valve V201, and add heated nitrogen gas at 80 °C through V102 to melt the solid fat adsorbed in the filter cake, and then enter into a liquid collection pipe through the filter plate, and then collect it through a valve V202, finally recover 287 g of a filtrate (solid fat), afterwards, blow dry a filter cake with nitrogen, open the filter cover. The filter cake recovered may be used for the next winterization process. afterwards, blow dry a filter cake with nitrogen, open the filter cover. The filter cake recovered may be used for the next winterization process.

## Claims

1. A method of efficiently separating solid fat from polyunsaturated fatty acid grease, comprising the following steps:
a) adding a certain amount of inert solid powder to a heated melted polyunsaturated fatty acid grease, and stirring evenly, the inert solid powder is selected from the group consisting of activated carbon, activated clay, diatomite and perlite, wherein the certain amount of inert solid powder is 0.1-6.0% (w/w) of a mass of the polyunsaturated fatty acid grease;
b) cooling crystallization the polyunsaturated fatty acid grease containing the inert solid powder obtained by step a), to obtain a crystalline mixture;
c) filtering the crystalline mixture obtained by step b) through a filter, to obtain a clarified polyunsaturated fatty acid grease and a filter cake;
d) introducing hot gas into the filter to make a solid fat melted into a liquid, and then recovering a liquid solid fat;
e) introducing nitrogen into the filter, blowing dry residual solid fat; and
f) recovering a filter cake with inert solid powder.

2. The method according to claim 1, wherein the polyunsaturated fatty acid grease is selected from the group consisting of fish oil, algal oil, linoleic acid, conjugated linoleic acid, linolenic acid and arachidonic acid.

3. The method according to claim 1 or 2, wherein the polyunsaturated fatty acid is in the form of methyl esters, ethyl esters, glycerides, or free fatty acids.

4. The method according to claim 1, wherein, in step a), a melting temperature of the polyunsaturated fatty acid grease is 30-100°C.

5. The method according to claim 1, wherein, in step a), the certain amount of the inert solid powder is 0.1-1.0% (w/w) of the mass of the polyunsaturated fatty acid grease.

6. The method according to claim 1, wherein, in step b), a temperature of cooling crystallization is -10-5°C.

7. The method according to claim 1 or 6, wherein, in step b), after cooling crystallization and before filtering, adding a certain amount of the inert solid powder.

8. The method according to claim 7, wherein, in step b), after cooling crystallization and before filtering, an additive amount of the inert solid powder is 0.5-6.0% (w/w) of a mass of the polyunsaturated fatty acid grease.

9. The method according to claim 1, wherein, in step d), the hot gas is a heating steam, a heating nitrogen, a heating air; a temperature of the hot gas is 30°C -100°C, preferably, a temperature of the hot gas is 80°C -100°C.

## Patentansprüche

1. Verfahren zum effizienten Trennen von festem Fett von Fett aus mehrfach ungesättigter Fettsäure, das die folgenden Schritte beinhaltet:
a) Zugeben einer bestimmten Menge an inertem festem Pulver zu einem erhitzten geschmolzenen Fett aus mehrfach ungesättigter Fettsäure und gleichmäßiges Rühren, wobei das inerte feste Pulver aus der Gruppe ausgewählt ist, die aus Aktivkohle, aktiviertem Ton, Diatomit und Perlit besteht, wobei die bestimmte Menge an inertem festem Pulver 0,1-6,0 % (Gew./Gew.) einer Masse des Fetts aus mehrfach ungesättigter Fettsäure beträgt;
b) Kühlungskristallisation des Fetts aus mehrfach ungesättigter Fettsäure, das das durch Schritt a) erhaltene inerte feste Pulver enthält, um eine kristalline Mischung zu erhalten;
c) Filtern der durch Schritt b) erhaltenen kristallinen Mischung durch einen Filter, um ein Fett aus geklärter mehrfach ungesättigter Fettsäure und einen Filterkuchen zu erhalten;
d) Einleiten von heißem Gas in den Filter, um ein festes Fett in eine Flüssigkeit schmelzen zu lassen, und dann Gewinnen eines flüssigen festen Fetts;
e) Einleiten von Stickstoff in den Filter, wodurch restliches festes Fett blasgetrocknet wird; und
f) Gewinnen eines Filterkuchens mit inertem festem Pulver.

2. Verfahren nach Anspruch 1, wobei das Fett aus mehrfach ungesättigter Fettsäure aus der Gruppe ausgewählt ist, die aus Fischöl, Algenöl, Linolsäure, konjugierter Linolsäure, Linolensäure und Arachidonsäure besteht.

3. Verfahren nach Anspruch 1 oder 2, wobei die mehrfach ungesättigte Fettsäure in Form von Methylestern, Ethylestern, Glyceriden oder freien Fettsäuren vorliegt.

4. Verfahren nach Anspruch 1, wobei in Schritt a) eine Schmelztemperatur des Fetts aus mehrfach ungesättigter Fettsäure 30-100 °C beträgt.

5. Verfahren nach Anspruch 1, wobei in Schritt a) die bestimmte Menge des inerten festen Pulvers 0,1-1,0 % (Gew./Gew.) der Masse des Fetts aus mehrfach ungesättigter Fettsäure beträgt.

6. Verfahren nach Anspruch 1, wobei in Schritt b) eine Temperatur der Kühlungskristallisation -10-5 °C beträgt.

7. Verfahren nach Anspruch 1 oder 6, wobei in Schritt b) nach der Kühlungskristallisation und vor dem Filtern eine bestimmte Menge des inerten festen Pulvers zugegeben wird.

8. Verfahren nach Anspruch 7, wobei in Schritt b) nach der Kühlungskristallisation und vor dem Filtern eine Additivmenge des inerten festen Pulvers 0,5-6,0 % (Gew./Gew.) einer Masse des Fetts aus mehrfach ungesättigter Fettsäure beträgt.

9. Verfahren nach Anspruch 1, wobei in Schritt d) das heiße Gas ein Heizdampf, ein Heizstickstoff, eine Heizluft ist; eine Temperatur des heißen Gases 30 °C-100 °C beträgt, vorzugsweise eine Temperatur des heißen Gases 80 °C-100 °C beträgt.

## Revendications

1. Un procédé de séparation efficace de graisse solide à partir d'une graisse d'acide gras polyinsaturé, comprenant les étapes suivantes :
a) l'ajout d'une certaine quantité de poudre solide inerte à une graisse d'acide gras polyinsaturé fondue chauffée, et leur agitation uniforme, la poudre solide inerte étant choisie dans le groupe constitué par le charbon actif, l'argile activée, la diatomite et la perlite, dans lequel la certaine quantité de poudre solide inerte est de 0,1 à 6,0 % (p/p) d'une masse de la graisse d'acide gras polyinsaturé ;
b) la cristallisation par refroidissement de la graisse d'acide gras polyinsaturé contenant la poudre solide inerte obtenue par l'étape a), pour obtenir un mélange cristallin ;
c) la filtration du mélange cristallin obtenu par l'étape b) à travers un filtre, pour obtenir une graisse d'acide gras polyinsaturé clarifiée et un gâteau de filtration ;
d) l'introduction de gaz chaud dans le filtre pour faire fondre une graisse solide en un liquide, puis la récupération d'une graisse solide liquide ;
e) l'introduction d'azote dans le filtre, le soufflage à sec de la graisse solide résiduelle ; et
f) la récupération d'un gâteau de filtration avec de la poudre solide inerte.

2. Le procédé selon la revendication 1, dans lequel la graisse d'acide gras polyinsaturé est choisie dans le groupe constitué par l'huile de poisson, l'huile d'algue, l'acide linoléique, l'acide linoléique conjugué, l'acide linolénique et l'acide arachidonique.

3. Le procédé selon la revendication 1 ou 2, dans lequel l'acide gras polyinsaturé est sous la forme d'esters méthyliques, d'esters éthyliques, de glycérides ou d'acides gras libres.

4. Le procédé selon la revendication 1, dans lequel, à l'étape a), une température de fusion de la graisse d'acide gras polyinsaturé est de 30 à 100 °C.

5. Le procédé selon la revendication 1, dans lequel, à l'étape a), la certaine quantité de la poudre solide inerte est de 0,1 à 1,0 % (p/p) de la masse de la graisse d'acide gras polyinsaturé.

6. Le procédé selon la revendication 1, dans lequel, à l'étape b), une température de cristallisation par refroidissement est de -10 à 5 °C.

7. Le procédé selon la revendication 1 ou 6, dans lequel, à l'étape b), après la cristallisation par refroidissement et avant la filtration, l'ajout d'une certaine quantité de la poudre solide inerte.

8. Le procédé selon la revendication 7, dans lequel, à l'étape b), après la cristallisation par refroidissement et avant la filtration, une quantité d'additif de la poudre solide inerte est de 0,5 à 6,0 % (p/p) d'une masse de la graisse d'acide gras polyinsaturé.

9. Le procédé selon la revendication 1, dans lequel, à l'étape d), le gaz chaud est une vapeur de chauffage, un azote de chauffage, un air de chauffage ; une température du gaz chaud est de 30 °C à 100 °C, de préférence, une température du gaz chaud est de 80 °C à 100 °C.
